# EUROPEAN PATENT APPLICATION

(11) **EP 4 545 659 A1**
(43) Date of publication of application: **30.04.2025**
(21) Application number: 23827415.3
(22) Date of filing: 09.06.2023
(51) Int. Cl.: C21D 8/12, C22C 38/02, C22C 38/04, C22C 38/06, C22C 38/00, C22C 38/14, C21D 9/46, B21C 47/02

(54) **NON-ORIENTED ELECTRICAL STEEL SHEET AND METHOD FOR MANUFACTURING SAME**

(30) Priority: 23.06.2022 KR 20220076986
(71) Applicant: Hyundai Steel Company, Incheon 22525 (KR)
(72) Inventor: CHO, Han Hyuk, Incheon 22525 (KR); KANG, Chun Ku, Incheon 22525 (KR)
(74) Representative: Viering, Jentschura & Partner mbB Patent- und Rechtsanwälte
(86) International application number: PCT/KR2023/007914
(87) International publication number: WO 2023/249295

(57) **Abstract**

Provided is a method of manufacturing a non-oriented electrical steel sheet, the method including providing a steel material containing silicon (Si), manganese (Mn), and aluminum (Al), hot rolling the steel material, first heat treating the hot-rolled steel material before coiling, coiling the first heat-treated steel material, uncoiling and cold rolling the coiled steel material, and cold annealing the cold-rolled steel material.

## Description

### TECHNICAL FIELD

The present invention relates to a non-oriented electrical steel sheet and a method of manufacturing the same, and more particularly, to a high-efficiency non-oriented electrical steel sheet and a method of manufacturing the same.

### BACKGROUND ART

Electrical steel sheets may be classified into oriented electrical steel sheets and non-oriented electrical steel sheets depending on their magnetic properties. Oriented electrical steel sheets exhibit excellent magnetic properties particularly in the rolling direction of the steel sheets because they are produced to be easily magnetized in the rolling direction, and thus are mostly used as cores for large, medium, and small-sized transformers which require low core loss and high magnetic permeability. On the other hand, non-oriented electrical steel sheets have uniform magnetic properties regardless of the direction of the steel sheets, and thus are commonly used as core materials for small motors, small power transformers, stabilizers, etc. The related document includes Korean Patent Publication No. 2015-0001467A.

### DETAILED DESCRIPTION OF THE INVENTION

### TECHNICAL PROBLEM

The present invention provides a high-efficiency non-oriented electrical steel sheet and a method of manufacturing the same.

However, the above description is an example, and the scope of the present invention is not limited thereto.

### TECHNICAL SOLUTION

According to an aspect of the present invention, there is provided a method of manufacturing a non-oriented electrical steel sheet, the method including providing a steel material containing silicon (Si), manganese (Mn), and aluminum (Al), hot rolling the steel material, first heat treating the hot-rolled steel material before coiling, coiling the first heat-treated steel material, uncoiling and cold rolling the coiled steel material, and cold annealing the cold-rolled steel material.

The steel material may include Si: 2.0 wt% to 4.0 wt%, Mn: 0.1 wt% to 0.5 wt%, Al: 0.3 wt% to 0.9 wt%, carbon (C): more than 0 wt% and not more than 0.003 wt%, phosphorus (P): more than 0 wt% and not more than 0.015 wt%, sulfur (S): more than 0 wt% and not more than 0.003 wt%, nitrogen (N): more than 0 wt% and not more than 0.003 wt%, titanium (Ti): more than 0 wt% and not more than 0.003 wt%, and a balance of iron (Fe) and unavoidable impurities.

The first heat treatment may be performed at a temperature higher than a temperature for the coiling, before the hot-rolled steel material is cooled to room temperature.

The hot rolling may be performed at a slab reheating temperature (SRT) of 1110 °C to 1150 °C and a finishing delivery temperature (FDT) of 860 °C to 900 °C, the first heat treatment may include maintaining a temperature of 850 °C to 1000 °C for 5 min. to 10 min., and the coiling may be performed at a temperature of 550 °C to 650 °C.

The cold annealing may include performing annealing under conditions of a heating rate: 20 °C/s or more, an annealing start temperature: 900 °C to 1100 °C, and a holding time: 30 sec. to 120 sec., and performing cooling under a condition of a cooling rate: 30 °C/s or more.

The cold rolling may be performed without preliminary annealing after the steel material is coiled.

According to another aspect of the present invention, there is provided a non-oriented electrical steel sheet including silicon (Si): 2.0 wt% to 4.0 wt%, manganese (Mn): 0.1 wt% to 0.5 wt%, aluminum (Al): 0.3 wt% to 0.9 wt%, carbon (C): more than 0 wt% and not more than 0.003 wt%, phosphorus (P): more than 0 wt% and not more than 0.015 wt%, sulfur (S): more than 0 wt% and not more than 0.003 wt%, nitrogen (N): more than 0 wt% and not more than 0.003 wt%, titanium (Ti): more than 0 wt% and not more than 0.003 wt%, and a balance of iron (Fe) and unavoidable impurities, wherein a ratio of an area fraction of inclusions with an average diameter of 5 *µ*m or more to an area fraction of inclusions with an average diameter of 2 *µ*m or less among inclusions constituting a final microstructure is greater than 0.3, and wherein the non-oriented electrical steel sheet has a core loss (W_{10/400}) of 12.5 W/kg or less and a magnetic flux density (B₅₀) of 1.66 T or more.

### ADVANTAGEOUS EFFECTS

According to an embodiment of the present invention, a high-efficiency non-oriented electrical steel sheet and a method of manufacturing the same may be provided.

However, the scope of the present invention is not limited to the above effect.

### DESCRIPTION OF THE DRAWINGS

FIG. 1 is a flowchart of a method of manufacturing a non-oriented electrical steel sheet, according to an embodiment of the present invention.
FIG. 2 is a flowchart of a method of manufacturing a non-oriented electrical steel sheet, according to a comparative example of the present invention.
FIG. 3 is a microscopic image of inclusions with an average diameter of 2 *µ*m or less in a sample of Test Example 1.
FIG. 4 is a microscopic image of inclusions with an average diameter of 5 *µ*m or more in a sample of Test Example 5.

### MODE OF THE INVENTION

A method of manufacturing a non-oriented electrical steel sheet, according to an embodiment of the present invention, will now be described in detail. The terms used herein are appropriately selected in consideration of their functions in the present invention, and definitions of these terms should be made based on the whole content of the present specification.

Electrical steel sheets are generally classified into oriented electrical steel sheets and non-oriented electrical steel sheets. Oriented electrical steel sheets are mostly used in stationary machines such as transformers, and non-oriented electrical steel sheets are commonly used in rotating machines such as motors. The properties of electrical steel sheets may be evaluated based on magnetic flux density and core loss. The magnetic flux density is mostly evaluated as B₅₀, and the core loss is generally evaluated as W_{15/50} but evaluated as W_{10/400} when high-frequency characteristics are required as in electric vehicles. B₅₀ indicates the magnetic flux density at 5000 A/m, W_{15/50} indicates the core loss at 50 Hz and 1.5 T, and W_{10/400} indicates the core loss at 400 Hz and 1.0 T.

Due to regulations aimed at reducing CO₂ emissions to combat global warming, existing internal combustion engine vehicles are being rapidly replaced by eco-friendly vehicles (e.g., hybrid electric vehicles (HEVs) and electric vehicles (EVs)), and more particularly, by EVs. As the demand for EVs increases, the energy conversion efficiency of EV drive motors is improving, and thus excellent magnetic properties of motor core materials are required. Non-oriented electrical steel sheets, which are used as motor core materials, serve to convert electrical energy into mechanical energy in rotating machines, and magnetic properties, i.e., low core loss and high magnetic flux density, are critical for energy saving. In particular, non-oriented electrical steel sheets with low core loss at high frequency (e.g., 400 Hz) are required to improve motor efficiency during high-speed operation where energy loss is high. To meet these requirements, non-oriented electrical steel sheet products are being developed by increasing resistivity or reducing material thickness through the addition of elements such as silicon (Si), manganese (Mn), and aluminum (Al). However, when alloying elements such as Si, Mn, and Al increase, the rolling process may not be performed properly, leading to a reduced a cold rolling recovery rate and difficulties in thickness reduction, and when the thickness of the electrical steel sheets is reduced, advanced production techniques are required, production costs increase, and productivity decreases.

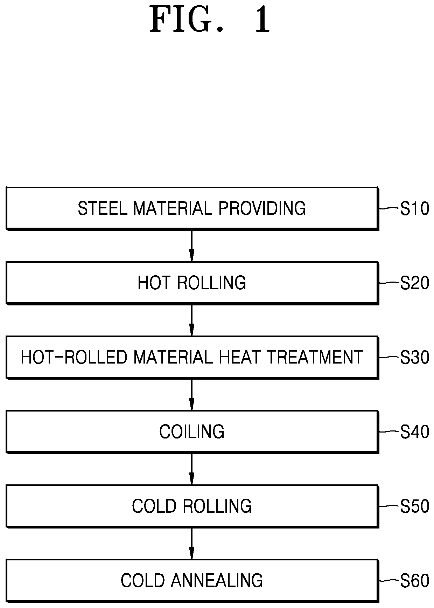

FIG. 1 is a flowchart of a method of manufacturing a non-oriented electrical steel sheet, according to an embodiment of the present invention.

Referring to FIG. 1, the non-oriented electrical steel sheet manufacturing method according to an embodiment of the present invention includes providing a steel material containing Si, Mn, and Al (S10), hot rolling the steel material (S20), first heat treating the hot-rolled steel material before coiling (S30), coiling the first heat-treated steel material (S40), uncoiling and cold rolling the coiled steel material (S50), and cold annealing the cold-rolled steel material (S60).

### Steel Material Providing (S10)

The steel material provided for the hot rolling process is a steel material for manufacturing a non-oriented electrical steel sheet, and includes, for example, Si: 2.0 wt% to 4.0 wt%, Mn: 0.1 wt% to 0.5 wt%, Al: 0.3 wt% to 0.9 wt%, carbon (C): more than 0 wt% and not more than 0.003 wt%, phosphorus (P): more than 0 wt% and not more than 0.015 wt%, sulfur (S): more than 0 wt% and not more than 0.003 wt%, nitrogen (N): more than 0 wt% and not more than 0.003 wt%, titanium (Ti): more than 0 wt% and not more than 0.003 wt%, and a balance of iron (Fe) and unavoidable impurities.

The functions and contents of example components to which the non-oriented electrical steel sheet manufacturing method according to the technical feature of the present invention is applicable will now be described. However, the non-oriented electrical steel sheet manufacturing method according to the technical feature of the present invention is not limited to the following example composition, and may be expanded to an arbitrary composition capable of enabling the functions of a non-oriented electrical steel sheet.

### Si: 2.0 wt% to 4.0 wt%

Si is a major element added as a component for increasing resistivity and reducing core loss (or eddy current loss). When the content of Si is less than 2.0 wt%, a desired low core loss value at high frequency is not easily achieved, and when the content increases, magnetic permeability and magnetic flux density decrease. When the content of Si is greater than 4.0 wt%, brittleness increases to cause difficulties in cold rolling and reduce productivity.

### Mn: 0.1 wt% to 0.5 wt%

Mn increases resistivity together with Si and improves texture. When Mn is added more than 0.5 wt%, coarse MnS precipitates are formed to deteriorate magnetic properties, e.g., a decrease in magnetic flux density. Furthermore, when the content of Mn is greater than 0.5 wt%, the decrease in core loss is small compared to the amount added, and cold rollability significantly deteriorates. Because fine MnS precipitates may be formed and grain growth may be suppressed when the content of Mn is less than 0.1 wt%, the composition of Mn may be controlled to 0.1 wt% to 0.5 wt%.

### Al: 0.3 wt% to 0.9 wt%

Al is a major element added as a component for increasing resistivity and reducing core loss (or eddy current loss) together with Si. Al serves to reduce magnetic deviation by reducing magnetic anisotropy. Al induces AIN precipitation when combined with N. When the content of Al is less than 0.3 wt%, the above-described effect may not be easily expected and fine nitrides may be formed to increase the deviation in magnetic properties, and when the content of Al is greater than 0.9 wt%, cold rollability deteriorates, and nitrides are excessively formed to reduce magnetic flux density and deteriorate magnetic properties.

### C: more than 0 wt% and not more than 0.003 wt%

C is an element for forming carbides such as TiC and NbC to increase core loss, and the less the better. The content of C is limited to 0.003 wt% or less. When the content of C is greater than 0.003 wt%, magnetic aging occurs to deteriorate magnetic properties, and when the content of C is 0.003 wt% or less, magnetic aging is suppressed.

### P: more than 0 wt% and not more than 0.015 wt%

P is a grain boundary segregation element and an element for developing texture. When the content of P is greater than 0.015 wt%, grain growth is suppressed, magnetic properties deteriorate, and cold rollability is reduced due to the segregation effect.

### S: more than 0 wt% and not more than 0.003 wt%

S forms precipitates such as MnS and CuS to increase core loss, and suppresses grain growth, and thus the less the better. The content of S is limited to 0.003 wt% or less. When the content of S is greater than 0.003 wt%, core loss increases.

### N: more than 0 wt% and not more than 0.003 wt%

N forms precipitates such as AIN, TiN, and NbN to increase core loss, and suppresses grain growth, and thus the less the better. The content of N is limited to 0.003 wt% or less. When the content of N is greater than 0.003 wt%, core loss increases.

### Ti: more than 0 wt% and not more than 0.003 wt%

Ti forms fine precipitates such as TiC and TiN and suppresses grain growth. Ti deteriorates magnetic properties, and thus the less the better. The content of Ti is limited to 0.003 wt% or less. When the content of Ti is greater than 0.003 wt%, magnetic properties deteriorate.

### Hot Rolling (S20)

The steel material having the above-described composition is hot-rolled. The hot rolling of the steel material (S20) may be performed under conditions of a slab reheating temperature (SRT): 1000 °C to 1200 °C (more strictly, 1110 °C to 1150 °C) and a finishing delivery temperature (FDT): 860 °C to 900 °C.

When the SRT is higher than 1200 °C (more strictly, 1150 °C), precipitates such as C, S, and N in the slab may be redissolved and fine precipitates may occur in subsequent rolling and annealing processes to suppress grain growth and deteriorate magnetic properties. When the SRT is lower than 1000 °C (more strictly, 1110 °C), rolling load may increase and the final product may have high core loss.

After the steel material is hot-rolled (S20), the hot-rolled plate may have a thickness of, for example, 1.8 mm to 2.6 mm. Because a cold rolling reduction ratio increases and texture deteriorates when the hot-rolled plate is thick, the thickness may be controlled to 2.6 mm or less.

### First Heat Treatment (S30)

The hot-rolled steel material may be first heat-treated before coiling (S30). The first heat treatment (S30) may be continuously performed before the hot-rolled steel material is cooled to room temperature. After the first heat treatment, the steel material may be cooled to room temperature. The first heat treatment may be annealing. The first heat treatment (S30) may be performed at a temperature higher than the temperature of the subsequent coiling (S40). For example, when the coiling temperature is 550 °C to 650 °C, the first heat treatment (S30) may include maintaining a temperature of 850 °C to 1000 °C for 5 min. to 10 min. When the first heat treatment temperature is lower than 850 °C, fine inclusions such as nitrides are formed from the surface layer, and the magnetic properties of the final product deteriorate due to insufficient growth of the inclusions. On the other hand, when the first heat treatment temperature is higher than 1000 °C, inclusions are formed and grains grow excessively to cause a significant grain size deviation, and oxidation occurs seriously to negatively affect the final product. Therefore, to obtain a uniform microstructure of the hot-rolled plate, the first heat treatment temperature may be controlled to 850 °C to 1000 °C.

### Coiling (S40)

The first heat-treated steel material may be coiled under a condition of a coiling temperature (CT): 550 °C to 650 °C. When the CT is lower than 550 °C, the annealing effect of the steel material does not occur and thus grains do not grow, and when the CT is higher than 650 °C, oxidation may increase during cooling and thus picklability may deteriorate.

### Cold Rolling (S50)

The coiled steel material is uncoiled and cold-rolled (S50). A cold rolling reduction ratio may be 80% to 85%, and the cold-rolled steel material may have a thickness of 0.35 mm or less (more strictly, 0.25 mm or less). To provide rollability, the plate temperature may be increased to 150 °C to 200 °C for warm rolling.

In general, after hot rolling and coiling and before cold rolling, preliminary annealing (e.g., annealing and pickling line (APL)) may be performed on the hot-rolled plate. For example, the preliminary annealing may include performing annealing under conditions of a heating rate: 20 °C/s or more, an annealing temperature: 950 °C to 1100 °C, and a holding time: 30 sec. to 120 sec., performing cooling under a condition of a cooling rate: 30 °C/s or more, and performing picking.

However, in the present invention, it is found that, because the hot-rolled steel material is first heat-treated before coiling as described above, cold rolling may be performed without preliminary annealing immediately after the oxide layer formed on the surface is removed using a pickling solution.

### Cold Annealing (S60)

The cold-rolled steel material may be cold-annealed. The cold annealing (S60) may include performing annealing under conditions of a heating rate: 20 °C/s or more, an annealing temperature: 900 °C to 1100 °C, and a holding time: 30 sec. to 120 sec., and performing cooling under a condition of a cooling rate: 30 °C/s or more. In the cold annealing, when the annealing temperature is lower than 900 °C, fine grains may be formed to increase hysteresis loss, and when the annealing temperature is higher than 1100 °C, coarse grains may be formed to increase eddy current loss.

The cold annealing is performed with the cold-rolled plate obtained after the cold rolling. A temperature capable of achieving an optimal grain size is applied in consideration of core loss reduction and mechanical properties. In the cold annealing, heating is performed under a mixed atmosphere condition to prevent surface oxidation and nitrification. The surface is further smoothed in a mixed atmosphere of nitrogen and hydrogen. When the cold annealing temperature is lower than 900 °C, fine grains may be formed to increase hysteresis loss, and when the cold annealing temperature is higher than 1100 °C, coarse grains may be formed to increase eddy current loss.

Meanwhile, a coating process may be performed to form an insulating coating layer after the final cold annealing. By forming the insulating coating layer, punchability may be improved and insulation may be ensured. The insulating coating layer formed on and under the cold-rolled material may have a thickness of about 1 *µ*m to 2 *µ*m.

The non-oriented electrical steel sheet manufactured using the above-described method may be a non-oriented electrical steel sheet including Si: 2.0 wt% to 4.0 wt%, Mn: 0.1 wt% to 0.5 wt%, Al: 0.3 wt% to 0.9 wt%, C: more than 0 wt% and not more than 0.003 wt%, P: more than 0 wt% and not more than 0.015 wt%, S: more than 0 wt% and not more than 0.003 wt%, N: more than 0 wt% and not more than 0.003 wt%, Ti: more than 0 wt% and not more than 0.003 wt%, and a balance of Fe and unavoidable impurities, wherein an average grain size is 80 *µ*m to 150 *µ*m, and a ratio of an area fraction of inclusions with an average diameter of 5 *µ*m or more to an area fraction of inclusions with an average diameter of 2 *µ*m or less among inclusions constituting a final microstructure is greater than 0.3. The non-oriented electrical steel sheet may have a core loss (W_{10/400}) of 12.5 W/kg or less, a magnetic flux density (B₅₀) of 1.66 T or more, a yield strength of 400 MPa or more, and a tensile strength of 500 MPa or more.

The present invention provides a non-oriented electrical steel sheet capable of achieving high magnetic flux density and low core loss by controlling the microstructure of a hot-annealed material based on mass-producible process conditions, and a method of manufacturing the same.

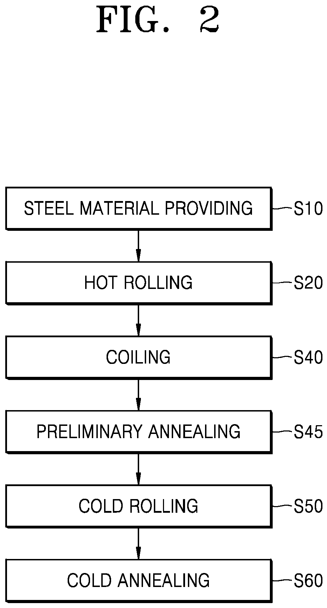

Referring to FIG. 2, a method of manufacturing a non-oriented electrical steel sheet, according to a comparative example of the present invention, generally includes producing a hot-rolled plate by reheating and then hot rolling a slab (S10, S20, and S40), preliminarily annealing (e.g., APL) the hot-rolled plate (S45), producing a cold-rolled plate by cold rolling the hot-annealed material (S50), and finally annealing (e.g., annealing and coating line (ACL)) the cold-rolled plate (S60). The APL process is essential for high-alloy non-oriented electrical steel sheets. Through the APL process, cold rollability is imparted, and the magnetic properties of the final product are enhanced. Because the magnetic quality of the final product is heavily influenced by the APL process, precise structural control is crucial. When the sizes of fine precipitates and inclusions are not controlled through heat treatment, domain wall motion may be delayed due to the fine precipitates and inclusions, resulting in deterioration of magnetic properties.

In a method of manufacturing a non-oriented electrical steel sheet, according to an embodiment of the present invention, after the non-oriented electrical steel sheet is hot-rolled, the first heat treatment (S30) is continuously performed before the hot-rolled material is cooled to a temperature below the coiling temperature. In this case, the first heat treatment may include maintaining a temperature of 850 °C to 1000 °C for 5 min. to 10 min. Due to the first heat treatment, APL may be omitted and an electrical steel sheet with better properties may be manufactured.

In the present invention, it is found that, by applying the above-described heat treatment, a microstructure in which a ratio of an area fraction of inclusions with an average diameter of 5 *µ*m or more to an area fraction of inclusions with an average diameter of 2 *µ*m or less among inclusions constituting the finally annealed material is greater than 0.3 may be ensured, and in this case, a core loss (W_{10/400}) of 12.5 W/kg or less and a magnetic flux density (B₅₀) of 1.66 T or more may be simultaneously achieved. The distribution of inclusions of all sizes on a 10×10 mm² cross-section of a laminated structure of the finally annealed material was analyzed based on brightness and contrast using the backscattered electron detector (BSD) mode of a scanning electron microscope (SEM).

The final product manufactured using the non-oriented electrical steel sheet manufacturing method of the present invention exhibits a uniform microstructure and improved magnetic properties. In this case, a core loss of 12.5 W/kg or less at W_{10/400} and a magnetic flux density of 1.65 T or more, and more specifically, a core loss of 12.0 W/kg or less at W_{10/400} and a magnetic flux density of 1.66 T or more, may be achieved.

As described above, reducing plate thickness and increasing resistivity are necessary to reduce the core loss of non-oriented electrical steel sheets. However, reducing plate thickness requires advanced production techniques, reduces productivity during processes, and increases the costs of processing and lamination in motor core production. Furthermore, while high-alloy elements such as Si, Al, and Mn are added to increase resistivity, the addition of such alloying elements complicates cold rolling. Non-oriented electrical steel sheets for high-efficiency electric vehicles are required to achieve high magnetic flux density and low core loss, and an optimal alloy composition and an advanced processing technique are required to increase resistivity.

In terms of alloy composition, Si, Al, and Mn are major alloying elements used to increase resistivity. In addition to the combination of these elements, elements capable of improving cold rollability, e.g., Cr, Cu, and Ni, are also being considered. However, such elements change the magnetic properties and the mechanical properties, and thus optimal conditions may not be easily found.

In terms of non-oriented electrical steel sheet manufacturing processes, it is known that APL is essential to achieve high magnetic flux density and low core loss in the final product of a non-oriented electrical steel sheet containing more than 3% Si. Although the texture may be improved by controlling a heating rate, magnetic properties deteriorate due to microstructural non-uniformity and thus microstructural control of a hot-rolled structure is essential starting from APL which is an intermediate process.

Considering the above, in the present invention, a hot-rolled material is heat-treated after hot rolling and before cooling to room temperature. Due to the hot-rolled material heat treatment, recrystallization/grain growth may be induced in the hot-rolled material and thus cold rolling may be performed without APL. As such, the process may be simplified, productivity may be increased, and high-quality non-oriented electrical steel sheets may be manufactured.

### Test Examples

Test examples will now be described for better understanding of the present invention. However, the following test examples are merely to promote understanding of the present invention, and the present invention is not limited to thereto.

### 1. Composition of Samples

The present test examples provide samples with the alloying element composition (unit: wt%) of Table 1.

**[Table 1]**

| Si | Mn | Al | C | P | S | N | Ti | Fe |
|---|---|---|---|---|---|---|---|---|
| 3.35 | 0.32 | 0.73 | 0.0025 | 0.0052 | 0.0014 | 0.0018 | 0.0011 | Bal. |

Referring to Table 1, the composition of non-oriented electrical steel sheets according to the test examples satisfies Si: 2.0 wt% to 4.0 wt%, Mn: 0.1 wt% to 0.5 wt%, Al: 0.3 wt% to 0.9 wt%, C: more than 0 wt% and not more than 0.003 wt%, P: more than 0 wt% and not more than 0.015 wt%, S: more than 0 wt% and not more than 0.003 wt%, N: more than 0 wt% and not more than 0.003 wt%, Ti: more than 0 wt% and not more than 0.003 wt%, and a balance of Fe. A hot-rolled plate with a thickness of 2.0 mm was produced by reheating a slab with the above-described composition to 1150 °C and performing hot rolling under a condition of a FDT of 890 °C. After the hot rolling, heat treatment was continuously performed under various temperature conditions. Then, a cold-rolled plate with a thickness of 0.25 t was produced by performing cold rolling, and final annealing was performed at 980 °C for 40 sec. Thereafter, a final product was manufactured through a coating process. The final annealing was performed in a mixed atmosphere of 30% hydrogen - 70% nitrogen. In this case, a heating rate of 20 °C/s and a cooling rate of 30 °C/s were used.

### 2. Process Conditions and Property Evaluation

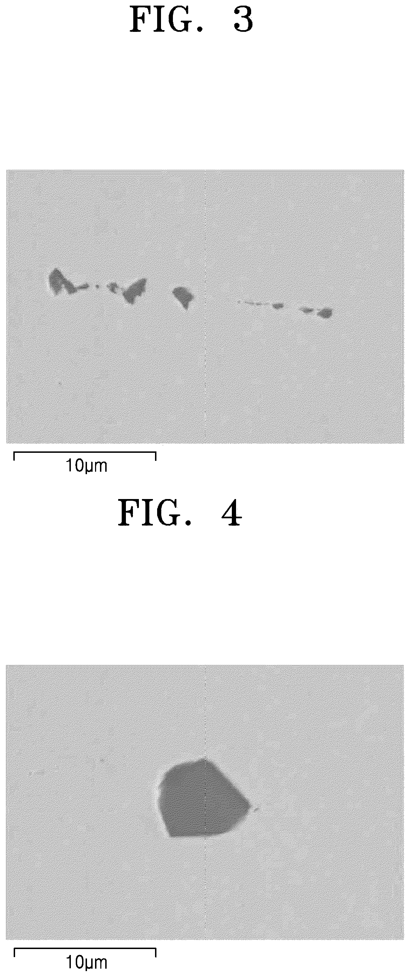

Table 2 shows process conditions, core losses (W_{10/400}), and magnetic flux densities (B₅₀) of the present test examples. FIG. 3 is a microscopic image of inclusions with an average diameter of 2 *µ*m or less in the sample of Test Example 1, and FIG. 4 is a microscopic image of inclusions with an average diameter of 5 *µ*m or more in the sample of Test Example 5.

Among heat treatment methods in Table 2, first heat treatment corresponds to the heat treatment (S30) according to an embodiment of the present invention, which is described above in relation to FIG. 1, and APL corresponds to the preliminary annealing (S45) according to an embodiment of the present invention, which is described above in relation to FIG. 2. That is, APL refers to preliminary annealing performed after hot rolling and before cold rolling, and the preliminary annealing includes performing annealing under conditions of a heating rate: 20 °C/s or more, an annealing temperature: 950 °C to 1100 °C, and a holding time: 30 sec. to 120 sec., and performing cooling under a condition of a cooling rate: 30 °C/s or more.

The inclusion related items in Table 2 show the distribution of inclusions in the finally annealed material, and indicate area fractions (area%) of inclusions with an average diameter of 2 *µ*m or less and inclusions with an average diameter of 5 *µ*m or more, and a ratio therebetween. The magnetic properties of the final product were determined by measuring and averaging core loss and magnetic flux density values in the L and C directions using a single sheet tester (SST).

**[Table 2]**

| | Heat Treatment Method | Annealing Temperature (°C) | Annealing Time (min.) | A: Inclusions ≤ 2um (area%) | B: Inclusions ≥ 5um (area%) | B/A | W_{10/400} | B₅₀ |
|---|---|---|---|---|---|---|---|---|
| Test Example 1 | First Heat Treatment | 700 | 5 | 71.2 | 9.1 | 0.13 | 14.1 | 1.63 |
| Test Example 2 | First Heat Treatment | 700 | 10 | 76.5 | 11.7 | 0.15 | 14.3 | 1.64 |
| Test Example 3 | First Heat Treatment | 750 | 5 | 62.8 | 13.5 | 0.21 | 14 | 1.64 |
| Test Example 4 | First Heat Treatment | 800 | 5 | 53.9 | 14.1 | 0.26 | 13.2 | 1.65 |
| Test Example 5 | First Heat Treatment | 850 | 5 | 51.7 | 16.9 | 0.33 | 12.2 | 1.68 |
| Test Example 6 | First Heat Treatment | 900 | 5 | 47.3 | 23.3 | 0.49 | 12.3 | 1.67 |
| Test Example 7 | First Heat Treatment | 950 | 5 | 44.8 | 25.9 | 0.58 | 11.8 | 1.68 |
| Test Example 8 | First Heat Treatment | 950 | 10 | 49.7 | 27.1 | 0.55 | 11.7 | 1.68 |
| Test Example 9 | First Heat Treatment | 975 | 5 | 47.1 | 25.9 | 0.55 | 12 | 1.67 |
| Test Example 10 | First Heat Treatment | 1000 | 5 | 41.1 | 19.1 | 0.46 | 11.9 | 1.68 |
| Test Example 11 | APL | 900 | 2 | 58.8 | 12.8 | 0.22 | 13.7 | 1.65 |
| Test Example 12 | APL | 950 | 2 | 62.7 | 15.2 | 0.24 | 13.2 | 1.65 |
| Test Example 13 | APL | 1000 | 2 | 61.4 | 17.3 | 0.28 | 12.9 | 1.66 |

Referring to Table 2, in Test Examples 1, 2, 3, and 4, the hot-rolled material heat treatment (S30) described above in relation to FIG. 1 was performed but the heat treatment temperature was below 850 °C to 1000 °C. In this case, it is shown that the ratio of the area fraction of inclusions with an average diameter of 5 *µ*m or more to the area fraction of inclusions with an average diameter of 2 *µ*m or less among inclusions constituting the final microstructure is less than 0.3, and that a core loss (W_{10/400}) of 12.5 W/kg or less and a magnetic flux density (B₅₀) of 1.66 T or more are not achieved. That is, because inclusions with an average diameter of 2 *µ*m or less increase when the hot-rolled material heat treatment temperature is low, the requirement for a ratio between an area fraction of inclusions with an average diameter of 5 *µ*m or more to an area fraction of inclusions with an average diameter of 2 *µ*m or less, which needs to be greater than 0.3, is not met, and the requirements for a core loss (W_{10/400}) of 12.5 W/kg or less and a magnetic flux density (B₅₀) of 1.66 T or more are not met.

In Test Examples 11, 12, and 13, the preliminary annealing (S45) described above in relation to FIG. 2 was performed instead of the hot-rolled material heat treatment (S30) described above in relation to FIG. 1. In this case, it is shown that the ratio of the area fraction of inclusions with an average diameter of 5 *µ*m or more to the area fraction of inclusions with an average diameter of 2 *µ*m or less among inclusions constituting the final microstructure is less than 0.3, and that a core loss (W_{10/400}) of 12.5 W/kg or less is not achieved.

On the other hand, in Test Examples 5, 6, 7, 8, 9, and 10, the hot-rolled material heat treatment (S30) described above in relation to FIG. 1 was performed, and the heat treatment temperature: 850 °C to 1000 °C and the heat treatment time: 5 min. to 10 min. were satisfied. In this case, it is shown that the ratio of the area fraction of inclusions with an average diameter of 5 *µ*m or more to the area fraction of inclusions with an average diameter of 2 *µ*m or less among inclusions constituting the final microstructure is greater than 0.3, and that a core loss (W_{10/400}) of 12.5 W/kg or less and a magnetic flux density (B₅₀) of 1.66 T or more are achieved.

The above test examples of the present invention show that, by heat treating a hot-rolled material after hot rolling and before cooling to room temperature, recrystallization/grain growth may be induced in the hot-rolled material and thus cold rolling may be performed without APL.

While the present invention has been particularly shown and described with reference to embodiments thereof, it will be understood by one of ordinary skill in the art that various changes in form and details may be made therein without departing from the scope of the present invention as defined by the following claims.

## Claims

1. A method of manufacturing a non-oriented electrical steel sheet, the method comprising:
providing a steel material containing silicon (Si), manganese (Mn), and aluminum (Al);
hot rolling the steel material;
first heat treating the hot-rolled steel material before coiling;
coiling the first heat-treated steel material;
uncoiling and cold rolling the coiled steel material; and
cold annealing the cold-rolled steel material.

2. The method of claim 1, wherein the steel material comprises Si: 2.0 wt% to 4.0 wt%, Mn: 0.1 wt% to 0.5 wt%, Al: 0.3 wt% to 0.9 wt%, carbon (C): more than 0 wt% and not more than 0.003 wt%, phosphorus (P): more than 0 wt% and not more than 0.015 wt%, sulfur (S): more than 0 wt% and not more than 0.003 wt%, nitrogen (N): more than 0 wt% and not more than 0.003 wt%, titanium (Ti): more than 0 wt% and not more than 0.003 wt%, and a balance of iron (Fe) and unavoidable impurities.

3. The method of claim 1, wherein the first heat treatment is performed at a temperature higher than a temperature for the coiling, before the hot-rolled steel material is cooled to room temperature.

4. The method of claim 1, wherein the hot rolling is performed at a slab reheating temperature (SRT) of 1110 °C to 1150 °C and a finishing delivery temperature (FDT) of 860 °C to 900 °C,
wherein the first heat treatment comprises maintaining a temperature of 850 °C to 1000 °C for 5 min. to 10 min., and
wherein the coiling is performed at a temperature of 550 °C to 650 °C.

5. The method of claim 1, wherein the cold annealing comprises performing annealing under conditions of a heating rate: 20 °C/s or more, an annealing start temperature: 900 °C to 1100 °C, and a holding time: 30 sec. to 120 sec., and performing cooling under a condition of a cooling rate: 30 °C/s or more.

6. The method of claim 1, wherein the cold rolling is performed without preliminary annealing after the steel material is coiled.

7. A non-oriented electrical steel sheet comprising silicon (Si): 2.0 wt% to 4.0 wt%, manganese (Mn): 0.1 wt% to 0.5 wt%, aluminum (Al): 0.3 wt% to 0.9 wt%, carbon (C): more than 0 wt% and not more than 0.003 wt%, phosphorus (P): more than 0 wt% and not more than 0.015 wt%, sulfur (S): more than 0 wt% and not more than 0.003 wt%, nitrogen (N): more than 0 wt% and not more than 0.003 wt%, titanium (Ti): more than 0 wt% and not more than 0.003 wt%, and a balance of iron (Fe) and unavoidable impurities,
wherein a ratio of an area fraction of inclusions with an average diameter of 5 *µ*m or more to an area fraction of inclusions with an average diameter of 2 *µ*m or less among inclusions constituting a final microstructure is greater than 0.3, and
wherein the non-oriented electrical steel sheet has a core loss (W_{10/400}) of 12.5 W/kg or less and a magnetic flux density (B₅₀) of 1.66 T or more.
